(19) Europäisches Patentamt
European Patent Office
Office européen des brevets

(11) **EP 2 373 745 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(21) Anmeldenummer: **09763938.9**

(22) Anmeldetag: **30.11.2009**

(51) Int Cl.:
*C09C 1/02* (2006.01)          *C09C 1/40* (2006.01)
*C09C 1/42* (2006.01)          *C09C 3/10* (2006.01)
*D21H 17/69* (2006.01)          *C09C 1/36* (2006.01)

(86) Internationale Anmeldenummer:
**PCT/EP2009/066010**

(87) Internationale Veröffentlichungsnummer:
**WO 2010/063658 (10.06.2010 Gazette 2010/23)**

(54) **WÄSSRIGE ANSCHLÄMMUNGEN VON FEINTEILIGEN FÜLLSTOFFEN, VERFAHREN ZU IHRER HERSTELLUNG UND IHRE VERWENDUNG ZUR HERSTELLUNG FÜLLSTOFFHALTIGER PAPIERE**

AQUEOUS SUSPENSIONS OF FINE-PARTICULATE FILLERS, METHOD FOR THE MANUFACTURE THEREOF AND USE THEREOF FOR THE MANUFACTURE OF PAPERS CONTAINING FILLERS

SUSPENSIONS AQUEUSES DE MATIÈRES DE CHARGE FINES, PROCÉDÉ DE FABRICATION ET UTILISATION DE CES SUSPENSIONS POUR LA FABRICATION DE PAPIERS CONTENANT DES MATIÈRES DE CHARGE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.12.2008 EP 08170590**

(43) Veröffentlichungstag der Anmeldung:
**12.10.2011 Patentblatt 2011/41**

(73) Patentinhaber: **Omya International AG**
**4665 Oftringen (CH)**

(72) Erfinder:
• **NIEBERLE, Jörg**
**67157 Wachenheim (DE)**
• **ESSER, Anton**
**67117 Limburgerhof (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
WO-A1-03/087472          WO-A1-2005/012637
WO-A1-2008/044118          WO-A1-2009/004079
DE-A1- 19 821 089

**Beschreibung**

Die Erfindung betrifft wässrige Anschlämmungen von feinteiligen Füllstoffen, die zumindest teilweise mit Polymerisaten überzogen sind, Verfahren zu ihrer Herstellung und ihre Verwendung als Zusatz zum Papierstoff bei der Herstellung von füllstoffhaltigem Papier, füllstoffhaltigem Karton und füllstoffhaltiger Pappe mit hoher Trockenfestigkeit.

Bei der Herstellung füllstoffhaltiger Papiere wird die Füllstoffslurry zu der Fasersuspension zugegeben, bevor diese zum Former der Papiermaschine weitergeleitet wird. Ein Retentionsmittel oder ein Retentionsmittelsystem wird in der Regel zu der Füllstoff/Faserstoffsuspension zugesetzt, um soviel Füllstoff wie möglich im Papierblatt zu retenieren. Die Zugabe des Füllstoffs zum Papier gibt dem Papiermacher die Möglichkeit, zahlreiche Verbesserungen der Blatteigenschaften zu erreichen. Dazu gehören Eigenschaften wie die Opazität, Weiße, Haptik und Bedruckbarkeit.

Wenn darüber hinaus der Füllstoff billiger ist als der Faserstoff, kann die Zugabe oder vermehrte Zugabe von Füllstoff zu einer Reduzierung des Faserstoffanteils und damit zu einer Reduzierung der Herstellkosten des Papiers führen. Füllstoffhaltige Papiere bzw. Papiere mit besonders hohem Füllstoffgehalt lassen sich leichter trocken als nicht füllstoffhaltige Papiere bzw. als Papiere mit geringerem Füllstoffgehalt. Als Folge daraus kann die Papiermaschine schneller und mit niedrigerem Dampfverbrauch betrieben werden, was sowohl die Produktivität erhöht als auch die Kosten senkt.

Jedoch bringt die Füllstoffzugabe zur Fasersuspension auch Nachteile mit sich, die nur teilweise durch die Zugabe weiterer Papierhilfsmittel kompensiert werden können. Für ein gegebenes Flächengewicht gibt es Grenzen bezüglich der einsetzbaren Füllstoffmenge. Die Festigkeitseigenschaften des Papiers sind normalerweise die wichtigsten Parameter, die die Füllstoffmenge im Papier limitieren. Auch andere Faktoren, wie die Füllstoffretention, die Entwässerung der Papierstoffsuspension sowie ein eventuell erhöhter Chemikalienbedarf bei Retention und Leimung können hier eine Rolle spielen.

Der Verlust von Festigkeitseigenschaften von Papieren kann in manchen Fällen ganz oder teilweise durch den Einsatz von Trocken- und Nassverfestigern kompensiert werden. Eine gängige Vorgehensweise ist dabei die Zugabe von kationischer Stärke als Trockenverfestiger in den Papierstoff. Ebenso werden synthetische Trocken- und Nassverfestiger z.B. auf der Basis kationischer oder anionischer Polyacrylamide eingesetzt. Die Zugabemenge und die verfestigende Wirkung sind jedoch in den meisten Fällen begrenzt. Im gleichen Maße ist auch die kompensierende Wirkung im Bezug auf den Festigkeitsverlust durch Füllstofferhöhung und damit auch die überhaupt realisierbare Füllstoffzunahme begrenzt. Darüber hinaus werden nicht alle Festigkeitseigenschaften in gleichem Maße und in manchen Fällen überhaupt nur unzureichend durch den Einsatz von Trockenverfestigern erhöht. Ein wichtiges Beispiel dafür ist die Weiterreisarbeit, die durch den Einsatz von Stärke oder synthetischen Trockenverfestigern im Vergleich zu anderen Festigkeitsparametern nur geringfügig beeinflusst wird. Die Erhöhung des Füllstoffgehaltes im Papier hat dagegen in der Regel einen sehr stark negativen Einfluss auf die Weiterreisarbeit.

Weitere wichtige Eigenschaften sind die Dicke sowie die Steifigkeit des Papiers. Die Erhöhung des Füllstoffgehaltes führt bei gleichem Flächengewicht zu einer Zunahme der Papierdichte und einer Abnahme der Dicke des Papierblattes. Letzteres führt zu einer erheblichen Abnahme der Papiersteifigkeit. Diese Abnahme der Papiersteifigkeit kann in vielen Fällen nicht allein durch den Einsatz von Trockenverfestigern ausgeglichen werden. Häufig sind zusätzliche Maßnahmen wie etwa die Reduzierung des mechanischen Druckes in der Pressenpartie in den Glättwerken, in Kalandern oder in der Trockenpartie der Papiermaschine notwendig. Letzteres kompensiert den Dickeverlust durch Füllstofferhöhung ganz oder teilweise.

In WO-A-03/074786 werden wässrige Anschlämmungen von feinteiligen Füllstoffen offenbart, die zumindest teilweise mit Polymerisaten überzogen sind. Bei diesen Polymerisaten handelt es sich um Bindemittel für Papierstreichfarben, deren Glasübergangstemperatur im Bereich von -40 bis +50 °C liegt und vorzugsweise unterhalb von 6 °C liegt. Das in den Beispielen verwendete Bindemittel weist eine Glasübergangstemperatur von 5 °C auf.

Aus der unveröffentlichten europäischen Anmeldung mit dem Aktenzeichen 08159619.9 sind wässrige Anschlämmungen von feinteiligen Füllstoffen bekannt, die zumindest teilweise mit anionischen Latices mit einer Glasübergangstemperatur von -5 bis -50 °C überzogen sind.

In der ebenfalls unveröffentlichten europäischen Anmeldung mit dem Aktenzeichen 08159631.4 sind wässrigen Anschlämmungen von feinteiligen Füllstoffen offenbart, die zumindest teilweise mit anionischen Latices, welche mindestens ein Phosphon- und/oder Phosphorsäuregruppen-enthaltendes Monomer einpolymerisiert enthält, überzogen sind.

WO 03/087472 A1 beschreibt eine Zusammensetzung zur Verwendung in der Papierherstellung umfassend geschwollene Stärkekörner und einen Latex in einem wässrigen Träger. Ein Verfahren zur Herstellung von wässrigen Anschlämmungen von feinteiligen Füllstoffen, die zumindest teilweise mit Polymerisaten überzogen sind, für die Herstellung füllstoffhaltiger Papiere, wobei man die wässrige Anschlämmung in Abwesenheit von kationischen Verfestigern für Papier mit mindestens einem Polymerleimungsmittel in Form einer wässrigen Dispersion mischt, ist in DE 198 21 089 A1 offenbart. WO 2005/012637 A1 betrifft eine wässrige Zusammensetzung umfassend wenigstens einen feinteiligen Füllstoff und wenigstens ein wasserlösliches Copolymerisat.

Der Erfindung lag die Aufgabe zugrunde, weitere wässrige Anschlämmungen von feinteiligen Füllstoffen zur Verfügung zu stellen, die bei der Papierherstellung gegenüber den bekannten Anschlämmungen Papiere mit einer verbesserten Reißlänge und Bedruckbarkeit ergeben. Darüber hinaus sollen die nach dem erfindungsgemäßen Verfahren hergestellten Papiere einen hohen Füllstoffgehalt und hohe Trockenfestigkeit aufweisen.

Die Aufgabe wird erfindungsgemäß gelöst mit wässrigen Anschlämmungen von feinteiligen Füllstoffen, die zumindest teilweise mit anionischen Latices überzogen sind, dadurch gekennzeichnet, dass die Anschlämmungen erhältlich sind durch Behandeln von wässrigen Anschlämmungen feinteiliger Füllstoffe mit einer wässrigen Dispersion enthaltend mindestens einen anionischen Latex, der mindestens ein Phosphon- und/oder Phosphorsäuregruppen-enthaltendes Monomer einpolymerisiert enthält, und mindestens eine abgebaute Stärke, die ein mittleres Molekulargewicht Mw von 1 000 bis 65 000 aufweist.

Die erfindungsgemäßen wässrigen Anschlämmungen enthalten beispielsweise 1 bis 70 Gew.-%, vorzugsweise 5 bis 50 Gew.-%, besonders bevorzugt 10 bis 40 Gew.-%, mindestens eines feinteiligen Füllstoffs. Die Menge der wässrigen Dispersion enthaltend mindestens einen anionischen Latex und mindestens eine abgebaute Stärke beträgt beispielsweise 0,01 bis 10 Gew.-%, vorzugsweise 0,1 bis 5 Gew.-%, besonders bevorzugt 0,2 bis 3 Gew.-%, Feststoffanteil der wässrigen Dispersion bezogen auf den Füllstoff. Dabei beträgt das Verhältnis anionischer Latex zu abgebauter Stärke beispielsweise 30 : 1 bis 1 : 1, vorzugsweise 10 : 1 bis 1 : 1 und besonders bevorzugt 5 : 1 bis 1 : 1.

Gegenstand der Erfindung ist außerdem ein Verfahren zur Herstellung der wässrigen Anschlämmungen, wobei man zu einer wässrigen Anschlämmung mindestens eines feinteiligen Füllstoffs 0,01 bis 10 Gew.-% einer wässrigen Dispersion enthaltend mindestens einen anionischen Latex und mindestens eine abgebaute Stärke, Feststoffanteil der Dispersion bezogen auf Füllstoff, zusetzt oder die wässrige Anschlämmung mindestens eines feinteiligen Füllstoffs in eine wässrige Dispersion enthaltend mindestens einen anionischen Latex und mindestens eine abgebaute Stärke einträgt und die Bestandteile jeweils mischt.

Ein weiterer Gegenstand der Erfindung ist die Verwendung der oben beschriebenen wässrigen Anschlämmungen als Zusatz zum Papierstoff bei der Herstellung von füllstoffhaltigem Papier, füllstoffhaltigem Karton oder füllstoffhaltiger Pappe mit hoher Trockenfestigkeit durch Entwässern des Papierstoffs.

Unter dem Begriff Latex im Sinne der vorliegenden Erfindung werden wasserunlösliche Homo- und Copolymerisate verstanden, die vorzugsweise in Form von Dispersionen oder Emulsionen eingesetzt werden.

Unter dem Begriff abgebaute Stärke im Sinne der vorliegenden Erfindung werden Stärken verstanden, die ein mittleres Molekulargewicht Mw von 1 000 bis 65 000 aufweisen.

Der Latex besteht vorzugsweise zu mindestens 40 Gew.-%, bevorzugt zu mindestens 60 Gew.-%, besonders bevorzugt zu mindestens 80 Gew.-% aus sogenannten Hauptmonomeren (a).

Die Hauptmonomeren (a) sind ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem $C_1$-$C_{10}$-Alkylrest, wie Methylmethacrylat, Methylacrylat, n-Butylacrylat, Isobutylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen mit bis zu 20 C-Atomen kommen Vinyltoluol, $\alpha$- und p-Methylstyrol, $\alpha$-Butylstyrol, 4-n-Butylstyrol, 4-n-Decylstyrol und vorzugsweise Styrol in Betracht. Beispiele für ethylenisch ungesättigte Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether von 1 bis 10 C-Atomen enthaltenden Alkoholen zu nennen sind z. B. Vinylmethylether oder Vinylisobutylether. Bevorzugt sind Vinylether von 1 bis 4 C-Atome enthaltenden Alkoholen.

Als aliphatische Kohlenwasserstoffe mit 2 bis 8 C-Atomen und ein oder zwei olefinischen Doppelbindungen seien Ethylen, Propylen, Butadien, Isopren und Chloropren genannt.

Bevorzugte Hauptmonomere (a) sind $C_1$-$C_{20}$-Alkyl(meth)acrylate und Mischungen der Alkyl(meth)acrylate mit Vinylaromaten, insbesondere Styrol (zusammenfassend auch als Polyacrylat-Latex bezeichnet) oder Kohlenwasserstoffe mit 2 Doppelbindungen, insbesondere Butadien, oder Gemische von derartigen Kohlenwasserstoffen mit Vinylaromaten, insbesondere Styrol (zusammenfassend auch als Polybutadien-Latex bezeichnet).

Neben den Hauptmonomeren (a) kann der Latex weitere Monomere (b) enthalten, z. B. Hydroxylgruppen enthaltende Monomere, insbesondere $C_1$-$C_{10}$-Hydroxyalkyl(meth)acrylate, und Monomere mit Alkoxygruppen, wie sie durch Alkoxylierung von Hydroxygruppen enthaltenden Monomeren mit Alkoxyden, insbesondere Ethylenoxid oder Propylenoxid, erhältlich sind.

Weitere Monomere (b) sind Verbindungen die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere 2. Derartige Verbindungen werden auch als Vernetzer bezeichnet.

Die mindestens zwei radikalisch polymerisierbaren Doppelbindungen der Vernetzer (b) können dabei ausgewählt sein aus der Gruppe bestehend aus (Meth)acryl-, Vinylether-, Vinylester-, Allylether- und Allylestergruppen. Beispiele für Vernetzer (b) sind 1,2-Ethandioldi(meth)acrylat, 1,3-Propandioldi(meth)acrylat, 1,2-Propandioldi(meth)acrylat, 1,4-Butandioldi(meth)acrylat, 1,6-Hexandioldi(meth)acrylat, Neopentylglykoldi(meth)acrylat, Trimethylolpropantrioldi(meth)acrylat, Pentaerythrittetra(meth)acrylat, 1,4-Butandioldivinylether, 1,6-Hexandioldivinylether, 1,4-Cyclohexandioldivinylether, Divinylbenzol, Allylacrylat, Allylmethacrylat, Methallylacrylat, Methallylmethacrylat, (Meth)Acrylsäure but-3-en-2-ylester, (Meth)Acrylsäure but-2-en-1-ylester, (Meth)Acrylsäure 3-methyl-but-2-en-1-ylester, Ester der (Meth)Acrylsäure mit Geraniol, Citronellol, Zimtalkohol, Glycerinmono- oder -diallylether, Trimethylolpropanmono- oder -diallylether, Ethylenglykolmonoallylether, Diethylenglykolmonoallylether, Propylenglykolmonoallylether, Dipropylenglykolmonoallylether, 1,3-Propandiolmonoallylether, 1,4-Butandiolmonoallylether sowie ferner Itaconsäurediallylester. Bevorzugt sind Allylacrylat, Divinylbenzol, 1,4-Butandioldiacrylat und 1,6-Hexandioldiacrylat.

Darüber hinaus kann der anionische Latex weitere Monomere (c) enthalten, z. B. Monomere mit Carbonsäuregruppen, deren Salze oder Anhydride. Genannt seien z. B. Acrylsäure, Methacrylsäure, Itaconsäure, Maleinsäure oder Fumarsäure und Aconitsäure. Der Gehalt an ethylenisch ungesättigten Säuren im Latex ist im Allgemeinen kleiner 10 Gew.-%. Der Anteil an diesen Monomeren (c) beträgt beispielsweise mindestens 1 Gew.-%, bevorzugt mindestens 2 Gew.-% und besonders bevorzugt mindestens 3 Gew.-%. Die Säuregruppen des Latices können gegebenenfalls vor der späteren Anwendung zumindest teilweise neutralisiert sein. Vorzugsweise werden mindestens 30 mol-%, besonders bevorzugt 50 - 100 mol-% der Säuregruppen neutralisiert. Als Base eignen sich flüchtige Basen wie Ammoniak oder nicht-flüchtige Basen wie Alkalihydroxide, insbesondere Natronlauge.

In einer ersten Ausführungsform der vorliegenden Erfindung weist der anionische Latex bestehend aus den oben genannten Monomeren eine Glasübergangstemperatur (gemessen mittels DSC) von -50 bis +50 °C, bevorzugt von -50 bis +10 °C, besonders bevorzugt von -40 bis +5 °C und ganz besonders bevorzugt von -30 bis 0 °C auf.

Die Glasübergangstemperatur $T_g$ ist dem Fachmann allgemein bekannt. Damit ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53765).

Nach Fox (T. G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g{}^1 + x^2/T_g{}^2 + \ldots x^n/T_g{}^n,$$

wobei $x^1$, $x^2$, .... $x^n$ die Massenbrüche der Monomeren 1, 2, .... n und $T_g{}^1$, $T_g{}^2$, .... $T_g{}^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z. B. in Ullmann's Encyclopedia of Industrial Chemistry, Bd. 5, Vol. A21, Seite 169, VCH Weinheim, 1992, aufgeführt. Weitere Quellen für Glasübergangstemperaturen von Homopolymerisaten bilden z. B. J. Brandrup, E. H. Immergut, Polymer Handbook, Ist Ed., J. Wiley, New York, 1966, 2nd Ed., J. Wiley, New York, 1975, und 3rd Ed., J. Wiley, New York, 1989.

Dem Fachmann ist mit Hilfe der zuvor genannten Literatur bekannt, wie durch die Auswahl der Monomere anionische Latices mit der entsprechenden Glasübergangstemperatur erhalten werden.

In einer Ausführungsform der vorliegenden Erfindung enthält der anionische Latex neben den oben genannten Monomeren mindestens ein Phosphon- und/oder Phosphorsäuregruppen-enthaltendes Monomer einpolymerisiert, wobei es sich sowohl um Monomere mit einer freien Säuregruppe als auch deren Salze, Ester und/oder Anhydride handeln kann.

Bevorzugt werden Phosphon- und/oder Phosphorsäuregruppen-enthaltende Monomere verwendet, die durch Veresterung von monoethylenisch ungesättigten $C_3$-$C_8$-Carbonsäuren mit gegebenenfalls monoalkoxylierten Phosphon- und/oder Phosphorsäuren erhältlich sind. Besonders bevorzugt sind gegebenenfalls monoalkoxylierte Phosphorsäuregruppen-enthaltende Monomere, die durch Veresterung von monoethylenisch ungesättigten $C_3$-$C_8$-Carbonsäuren mit gegebenenfalls monoalkoxylierten Phosphorsäuren der allgemeinen Formel (I)

$$\text{H-[X]}_n\text{-P(O)(OH)}_2 \qquad (I)$$

erhältlich sind, worin

X    eine geradkettige oder verzweigte $C_2$-$C_6$-Alkylenoxideinheit und

n    eine ganze Zahl von 0 bis 20

bedeuten.

Bevorzugt werden monoalkoxylierte Phosphorsäuren der Formel (I) verwendet, in denen X eine geradkettige oder verzweigte $C_2$-$C_3$-Alkylenoxideinheit ist, und n eine ganze Zahl zwischen 5 und 15 ist. Besonders bevorzugt handelt es sich bei X um eine Ethylen- oder Propylenoxideinheit, insbesondere bevorzugt um eine Propylenoxideinheit.

Selbstverständlich können auch beliebige Mischungen von verschiedenen gegebenenfalls monoalkoxylierten Phosphonsäuren und gegebenenfalls monoalkoxylierten Phosphorsäuren der Formel (I) zur Veresterung mit einer monoethylenisch ungesättigten $C_3$-$C_8$-Carbonsäure eingesetzt werden. Bevorzugt werden Mischungen von monoalkoxylierten Phosphorsäuren der Formel (I) eingesetzt, die dieselbe Alkylenoxideinheit, bevorzugt Propylenoxid, enthalten, jedoch eine unterschiedlichen Alkoxylierungsgrad, bevorzugt Propoxylierungsgrad, aufweisen. Besonders bevorzugte Mischungen von monoalkoxylierten Phosphorsäuren enthalten 5 - 15 Einheiten Propylenoxid, d.h. n ist eine ganze Zahl zwischen 5 und 15.

Zur Herstellung der Phosphon- und/oder Phosphorsäuregruppen-enthaltenden Monomere werden monoethylenisch ungesättigten Carbonsäuren mit 3 bis 8 C-Atomen mit den oben genannten gegebenenfalls monoalkoxylierten Phosphon- und/oder Phosphorsäuren, bevorzugt mit den gegebenenfalls monoalkoxylierten Phosphorsäuren der allgemeinen Formel (I) verestert. Derartige monoethylenisch ungesättigte $C_3$-$C_8$-Carbonsäuren sind beispielsweise Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, Maleinsäure. Bevorzugt werden Acrylsäure und Methacrylsäure verwendet.

Selbstverständlich können auch Mischungen von monoethylenisch ungesättigten $C_3$-$C_8$-Carbonsäuren zur Veresterung mit gegebenenfalls monoalkoxylierten Phosphon- und/oder Phosphorsäuren, bevorzugt mit gegebenenfalls monoalkoxylierten Phosphorsäuren der Formel (I), eingesetzt werden. Bevorzugt wird jedoch nur eine monoethylenisch ungesättigte Carbonsäure, beispielsweise Acrylsäure oder Methacrylsäure, verwendet.

Bevorzugt eingesetzte anionische Latices dieser zweiten Ausführungsform sind beispielsweise wässrige Dispersionen aus

(1) Styrol und/oder Acrylnitril oder Methacrylnitril,

(2) Acrylsäureestern und/oder Methacrylsäureestern von $C_1$- bis $C_{10}$-Alkoholen, und gegebenenfalls

(3) Acrylsäure, Methacrylsäure, Maleinsäure und/oder Itaconsäure, und

(4) (Meth)acrylsäureestern von gegebenenfalls monoalkyoxylierten Phosphorsäuren der Formel (I), worin X und n die zuvor genannte Bedeutung haben.

Besonders bevorzugt sind wässrige Dispersionen von anionischen Latices aus

(1) Styrol und/oder Acrylnitril,

(2) Acrylsäureestern von $C_1$- bis $C_4$-Alkoholen, und gegebenenfalls

(3) Acrylsäure, und

(4) (Meth)acrylsäureestern von monoalkoxylierten Phosphorsäuren der Formel (I), worin X eine Propylenoxideinheit ist, und n eine ganze Zahl zwischen 5 und 15 ist.

Beispielsweise enthalten derartige besonders bevorzugte Polyacrylat-Latices 2 - 25 Gew.-% Styrol, 2-25 Gew.-% Acrylnitril, 50 - 95 Gew.-% $C_1$-$C_4$-Alkylacrylate, bevorzugt $C_4$-Acrylate wie n-Butylacrylat, Isobutylacrylat und/oder tert. Butylacrylat, 0 - 5 Gew.-% Acrylsäure und 0,1 - 5 Gew.-% (Meth)acrylsäureester von monoalkoxylierten Phosphorsäuren der Formel (I), worin X eine Propylenoxideinheit ist, und n eine ganze Zahl zwischen 5 und 15 ist.

Üblicherweise liegt die Glasübergangstemperatur (gemessen mittels DSC) der anionischen Latices der zweiten Ausführungsform im Bereich von -40 bis +50 °C. Bevorzugt werden anionische Latices mit einer Glasübergangstemperatur von -20 bis +20 °C und besonders bevorzugt von -10 bis +10 °C in den erfindungsgemäßen wässrigen Anschlämmungen feinteiliger Füllstoffe eingesetzt.

Die Herstellung der anionischen Latices erfolgt unabhängig von den zuvor genannten beiden Ausführungsformen in der Regel durch Emulsionspolymerisation, es handelt sich daher um ein Emulsionspolymerisat. Die Herstellung wässriger Polymerisatdispersionen nach dem Verfahren der radikalischen Emulsionspolymerisation ist an sich bekannt (vgl. Houben-Weyl, Methoden der organischen Chemie, Band XIV, Makromolekulare Stoffe, loc. cit., Seiten 133ff).

Bei der Emulsionspolymerisation zur Herstellung der Latices werden ionische und/oder nicht-ionische Emulgatoren und/oder Schutzkolloide bzw. Stabilisatoren als grenzflächenaktive Verbindungen verwendet. Die grenzflächenaktive Substanz wird üblicherweise in Mengen von 0,1 bis 10 Gew.-%, insbesondere von 0,2 bis 3 Gew.-% bezogen auf die zu polymerisierenden Monomeren verwendet.

Gebräuchliche Emulgatoren sind z. B. Ammonium- oder Alkalimetallsalze höherer Fettalkoholsulfate, wie Na-n-Laurylsulfat, Fettalkoholphosphate, ethoxylierte $C_8$- bis $C_{10}$-Alkylphenole mit einem Ethoxylierungsgrad von 3 bis 30 sowie ethoxylierte $C_8$- bis $C_{25}$-Fettalkohole mit einem Ethoxylierungsgrad von 5 bis 50. Denkbar sind auch Gemische aus nichtionischen und ionischen Emulgatoren. Ferner geeignet sind phosphat- oder sulfatgruppenhaltige, ethoxylierte und/oder propoxylierte Alkylphenole und/oder Fettalkohole. Weitere geeignete Emulgatoren sind in Houben-Weyl, Methoden der organischen Chemie, Band XIV, Makromolekulare Stoffe, Georg Thieme Verlag, Stuttgart, 1961, Seiten 192 bis 209 aufgeführt.

Wasserlösliche Initiatoren für die Emulsionspolymerisation zur Herstellung der Latices sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations(Red-Ox)-Initiator Systeme.

Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Emulsionspolymerisation können Regler eingesetzt werden, z. B. in Mengen von 0 bis 3 Gew.-Teile, bezogen auf 100 Gew.-Teile der zu polymerisierenden Monomeren, durch die die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan oder Regler ohne Thiolgruppe, insbesondere z. B. Terpinolen.

Die Emulsionspolymerisation zur Herstellung der Latices erfolgt in der Regel bei 30 bis 130 °C, vorzugsweise bei 50 bis 100 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Im Anschluss an die CoPolymerisation können die im Latex enthaltenen Säuregruppen noch zumindest teilweise neutralisiert werden. Dies kann beispielsweise erfolgen mit Oxiden, Hydroxiden, Carbonaten oder Hydrogencarbonaten von Alkalimetallen oder Erdalkalimetallen, bevorzugt mit Hydroxiden, denen ein beliebiges Gegenion oder mehrere assoziiert sein kann, z.B. $Li^+$, $Na^+$, $K^+$, $Cs^+$, $Mg^{2+}$, $Ca^{2+}$ oder $Ba^{2+}$. Weiterhin zur Neutralisierung geeignet sind Ammoniak oder Amine. Bevorzugt sind wässrige Ammoniumhydroxid-, Natriumhydroxid- oder Kaliumhydroxidlösungen.

Bei der Emulsionspolymerisation werden wässrige Dispersionen des Latices in der Regel mit Feststoffgehalten von 15 bis 75 Gew.-%, bevorzugt von 40 bis 75 Gew.-% erhalten.

Die Partikelgröße der Latices liegt vorzugsweise im Bereich von 10 bis 1000 nm, besonders bevorzugt im Bereich von 50 bis 300 nm (gemessen mit einem Malvern® Autosizer 2 C).

Die erfindungsgemäßen wässrigen Anschlämmungen feinteiliger Füllstoffe werden durch Behandeln einer Füllstoffanschlämmung mit einer wässrigen Dispersion enthaltend mindestens einen anionischen Latex und mindestens eine abgebaute Stärke erhalten. Wie zuvor beschrieben weisen die abgebauten Stärken ein mittleres Molekulargewicht Mw von 1 000 bis 65 000 auf. Die mittleren Molekulargewichte Mw der abgebauten Stärken können leicht durch dem Fachmann bekannte Methoden ermittelt werden, z. B. mittels Gelpermeationschromatographie unter Verwendung eines Vielwinkellichtstreudetektors.

Um eine solche Stärke zu erhalten, kann man von sämtlichen Stärkesorten ausgehen, z.B. von nativer, anionischer, kationischer oder amphoterer Stärke. Die Stärke kann z.B. aus Kartoffeln, Mais, Weizen, Reis, Tapioka, Sorghum stammen oder es kann sich um Wachsstärken handeln, die einen Gehalt an Amylopektin von > 80, vorzugsweise > 95 Gew.-% haben wie Wachsmaisstärke oder Wachskartoffelstärke. Die Stärken können anionisch und/oder kationisch modifiziert, verestert, verethert und/oder vernetzt sein. Bevorzugt werden kationisierte Stärken.

Sofern das Molekulargewicht Mw der Stärken nicht bereits in dem Bereich von 1 000 bis 65 000 liegt, werden sie einem Molekulargewichtsabbau unterworfen. Dieser Molekulargewichtsabbau kann oxidativ, thermisch, acidolytisch oder enzymatisch vorgenommen werden. Bevorzugt ist eine Vorgehensweise, bei der man eine Stärke enzymatisch und/oder oxidativ abbaut. Die Molmasse Mw der abgebauten Stärke liegt vorzugsweise in dem Bereich von 2 500 bis 35 000.

Besonders bevorzugt ist die Verwendung von anionischen oder von kationischen Stärken. Solche Stärken sind bekannt. Anionische Stärken sind beispielsweise durch Oxidation von nativen Stärken zugänglich. Kationische Stärken werden beispielsweise durch Umsetzung von nativer Stärke mit mindestens einem Quaternierungsmittel wie 2,3-Epoxipropyltrimethylammoniumchlorid hergestellt. Die kationisierten Stärken enthalten quaternäre Ammoniumgruppen.

Der Anteil von kationischen oder anionischen Gruppen in substituierter Stärke wird mit Hilfe des Substitutionsgrades (DS) angegeben. Er beträgt beispielweise 0,005 bis 1,0 vorzugsweise 0,01 bis 0,4.

Man kann eine einzige abgebaute Stärke oder auch Mischungen aus zwei oder mehreren abgebauten Stärken einsetzen.

In einer besonders bevorzugten Form werden als abgebaute Stärke Maltodextrine eingesetzt. Maltodextrine im Sinne der vorliegenden Erfindung sind durch enzymatischen Abbau von Stärke gewonnene wasserlösliche Kohlenhydrate, die aus Glucose-Einheiten bestehen und ein Dextrose-Äquivalent besitzen.

Die zur Herstellung der erfindungsgemäßen wässrigen Anschlämmungen feinteiliger Füllstoff eingesetzten wässrigen Dispersionen enthaltend mindestens einen anionischen Latex und mindestens eine abgebaute Stärke können auf unterschiedliche Weise hergestellt werden. Beispielsweise kann die abgebaute Stärke fest oder in Wasser gelöst in eine wässrige Dispersion des anionischen Latex eingebracht und gemischt werden. Alternativ kann die Emulsionspolymerisation zur Herstellung des anionischen Latices auch in Gegenwart der abgebauten Stärke erfolgen.

Die wässrigen Dispersionen enthaltend mindestens einen anionischen Latex und mindestens eine abgebaute Stärke werden erfindungsgemäß zur Behandlung von feinteiligen Füllstoffen eingesetzt. Als Füllstoffe kommen alle üblicherweise in der Papierindustrie einsetzbaren Pigmente aus anorganischem Material in Betracht, z.B. Calciumcarbonat, das in Form von gemahlenem Kalk (GCC), Kreide, Marmor oder präzipitiertem Calciumcarbonat (PCC) eingesetzt werden kann, Talkum, Kaolin, Bentonit, Satinweiß, Calciumsulfat, Bariumsulfat oder Titandioxid. Man kann auch Mischungen aus zwei oder mehr Pigmenten einsetzen, bevorzugt wird jedoch ein Pigment eingesetzt. Der mittlere Teilchendurchmesser liegt beispielsweise im Bereich von 0,5 bis 30 $\mu$m, vorzugsweise zwischen 1 und 10 $\mu$m.

Ein anderer Gegenstand der vorliegenden Erfindung ist ein Verfahren zur Herstellung der wässrigen Anschlämmung von feinteiligen Füllstoffen.

Die Füllstoffe werden beispielsweise durch Einbringen in Wasser zu einer wässrigen Anschlämmung verarbeitet. Präzipitiertes Calciumcarbonat wird üblicherweise in Abwesenheit von Dispergiermitteln in Wasser aufgeschlämmt. Um wässrige Anschlämmungen der übrigen Füllstoffe herzustellen, verwendet man in der Regel ein anionisches Dispergiermittel, z.B. Polyacrylsäuren mit einer Molmasse $M_w$ von beispielsweise 1 000 bis 40 000. Falls man ein anionisches Dispergiermittel verwendet, so setzt man davon beispielsweise 0,01 bis 0,5 Gew.-%, vorzugsweise 0,2 bis 0,3 Gew.-% zur Herstellung der wässrigen Füllstoffanschlämmungen ein. Die in Gegenwart von anionischen Dispergiermitteln in Wasser dispergierten feinteiligen Füllstoffe sind anionisch. Die wässrigen Anschlämmungen enthalten besonders bevorzugt 10 bis 40 Gew.-% mindestens eines Füllstoffs.

Um die erfindungsgemäßen wässrigen Anschlämmungen von feinteiligen Füllstoffen herzustellen, behandelt man wässrige Anschlämmungen von gegebenenfalls anionisch dispergierten feinteiligen Füllstoffen mit einer wässrigen Dispersion enthaltend mindestens einen anionischen Latex und mindestens eine abgebaute Stärke. Beispielsweise kann man zu einer 1 bis 70 Gew.-% mindestens eines feinteiligen Füllstoffs enthaltenden wässrigen Anschlämmung 0,01 bis 10 Gew.-% einer wässrigen Dispersion enthaltend mindestens einen anionischen Latex und mindestens eine abgebaute Stärke, Feststoffanteil der wässrigen Dispersion bezogen auf den Füllstoff, zusetzen oder eine wässrige Anschlämmung eines feinteiligen Füllstoffs in eine wässrige Dispersion enthaltend mindestens einen anionischen Latex und mindestens eine abgebaute Stärke eintragen und die Komponenten jeweils mischen. Ebenso ist es möglich, dass der feinteilige Füllstoff fest in eine wässrige Dispersion enthaltend mindestens einen anionischen Latex und mindestens eine abgebaute Stärke eingebracht wird. Das Behandeln der wässrigen Anschlämmungen von feinteiligen Füllstoffen mit den wässrigen Dispersionen enthaltend anionischen Latices und abgebaute Stärken kann kontinuierlich oder diskontinuierlich durchgeführt werden. Beim Zusammenbringen der feinteiligen Füllstoffe mit den wässrigen Dispersionen enthaltend anionische Latices und abgebaute Stärken werden die Füllstoffe zumindest teilweise mit anionischen Latices überzogen bzw. imprägniert. Das Mischen der Komponenten erfolgt beispielsweise in einem Scherfeld. Meistens ist es ausreichend, wenn man die Komponenten nach dem Zusammenbringen rührt oder sie in einem Scherfeld eines Ultraturraxgerätes behandelt. Das Zusammenbringen und Mischen der Bestandteile der wässrigen Anschlämmungen kann beispielsweise in dem Temperaturbereich von 0°C bis 95°C, vorzugsweise 10 bis 70°C erfolgen. Meistens mischt man die Komponenten bei der jeweiligen Raumtemperatur bis zu einer Temperatur von 40°C. Der pH-Wert der mit anionischen Latices behandelten wässrigen Anschlämmungen von Füllstoffen beträgt beispielsweise 5 bis 11, vorzugsweise 6 bis 9, wobei der pH-Wert von Calciumcarbonat enthaltenden Anschlämmungen vorzugsweise mehr als 6,5 beträgt.

Die Herstellung der erfindungsgemäßen wässrigen Anschlämmungen von feinteiligen Füllstoffen durch die Behandlung mit der wässrigen Dispersion enthaltend mindestens einen anionischen Latex und mindestens eine abgebaute Stärke erfolgt in der Regel bei Raumtemperatur. Jedoch kann es in machen Fällen von Vorteil sein, die Behandlung durch Zufuhr von Wärme durchzuführen. Beispielsweise kann die wässrige Anschlämmung von feinteiligen Füllstoffen während der Zugabe der wässrigen Dispersion enthaltend mindestens einen anionischen Latex und mindestens eine abgebaute Stärke bei einer Temperatur von mindestens 40°C, bevorzugt von mindestens 45 °C und besonders bevorzugt von mindestens 50 °C erwärmt werden (jeweils bei Atmosphärendruck). Ebenfalls ist es möglich, dass die wässrige Anschlämmung feinteiliger Füllstoffe vor der Zugabe der wässrigen Dispersion enthaltend mindestens einen anionischen Latex und mindestens eine abgebaute Stärke durch Erwärmung auf eine Temperatur von mindestens 40 °C, bevorzugt von mindestens 45 °C und besonders bevorzugt von mindestens 50 °C (jeweils bei Atmosphärendruck) gebracht wird. Die Erwärmung der wässrigen Anschlämmung feinteiliger Füllstoffe kann durch aktives Erhitzen, d.h. durch Zufuhr von Energie erfolgen, aber auch durch die bei der Herstellung der Füllstoffanschlämmung freiwerden Reaktionswärme. Alternativ kann auch die Behandlung einer wässrigen Anschlämmung von feinteiligen Füllstoffen mit der wässrigen Dispersion enthaltend mindestens einen anionischen Latex und mindestens eine abgebaute Stärke bei Raumtemperatur erfolgen, wobei anschließend die Erwärmung der erfindungsgemäßen wässrigen Anschlämmungen auf Temperaturen von mindestens 40 °C, bevorzugt mindestens 45 °C und besonders bevorzugt von mindestens 50 °C (jeweils bei Atmosphärendruck) erfolgt. Ebenfalls möglich ist die Zugabe einer auf mindestens 40 °C, bevorzugt mindestens 45 °C, besonders bevorzugt mindestens 50 °C (jeweils bei Atmosphärendruck) erwärmten Dispersion enthaltend mindestens einen anionischen Latex und mindestens eine abgebaute Stärke zu einer bei Raumtemperatur oder erwärmten wässrigen Anschlämmung feinteiliger Füllstoffe. Bei der Erwärmung der jeweiligen Komponenten darf die Siedetemperatur (bei Atmosphärendruck) der wässrigen Anschlämmungen oder wässrigen Dispersionen selbstverständlich nicht überschritten werden.

Besonders bevorzugt werden wässrige Anschlämmungen von präzipitiertem Calciumcarbonat, das frei von Dispergiermitteln ist, und von gemahlenem Calciumcarbonat hergestellt, das durch Mahlen von stückigem Calciumcarbonat oder Marmor in Gegenwart von anionischen polymeren Dispergiermitteln wie Polyacrylsäuren mit Molmassen von 1 000 bis 15 000 erhältlich ist.

Ein weiterer Gegenstand der Erfindung ist die Verwendung der wässrigen Anschlämmungen als Zusatz zum Papierstoff bei der Herstellung von füllstoffhaltigem Papier, füllstoffhaltigem Karton oder füllstoffhaltiger Pappe durch Entwässern des Papierstoffs.

Die erfindungsgemäß mit einem anionischen Latex und abgebauter Stärker behandelten wässrigen Pigmentanschlämmungen können zur Herstellung sämtlicher füllstoffhaltiger Papierqualitäten eingesetzt werden, z.B. Zeitungsdruck, SC-Papier (supercalandriertes Papier), holzfreie oder holzhaltige Schreib- und Druckpapiere. Zur Herstellung solcher Papiere verwendet man beispielsweise als Hauptrohstoffkomponenten Holzschliff, thermomechanischen Stoff (TMP), chemo-thermomechanischem Stoff (CTMP), Druckschliff (PGW) sowie Sulfit- und Sulfatzellstoff. Durch die Verwendung der erfindungsgemäßen wässrigen Anschlämmungen kann der Füllstoffgehalt des Papiers bei nahezu unveränderten Festigkeitseigenschaften deutlich erhöht werden. Solche Papiere weisen Festigkeitseigenschaften auf, die mit denen herkömmlicher Papiere mit niedrigem Feststoffgehalt vergleichbar sind.

Die erfindungsgemäßen wässrigen Anschlämmungen feinteiliger Füllstoffe werden bei der Papierherstellung dem Faserstoff beigemischt, um so den Gesamtpapierstoff zu bilden. Neben den behandelten Füllstoffen und Faserstoffen kann der Gesamtstoff noch andere konventionelle Papieradditive enthalten. Dazu gehören beispielsweise Leimungsmittel wie Alkylketendimere (AKD), Alkenylbernsteinsäureanhydride (ASA), Harzleim, Nassfestmittel, kationische oder anionische Retentionsmittel auf Basis synthetischer Polymere. Als Retentionsmittel kommen beispielsweise anionische Mikropartikel (kolloidale Kieselsäure, Bentonit), anionische Polyacrylamide, kationische Polyacrylamide, kationische Stärke, kationisches Polyethylenimin oder kationisches Polyvinylamin in Frage. Darüber hinaus sind beliebige Kombinationen davon denkbar, beispielsweise duale Systeme, die aus einem kationischen Polymer mit einem anionischen Mikropartikel oder einem anionischen Polymer mit einem kationischen Mikropartikel bestehen. Um eine hohe Füllstoffretention zu erreichen, empfiehlt sich die Zugabe von derartigen Retentionsmitteln, die beispielsweise zum Dickstoff aber auch zu dem Dünnstoff zugegeben werden können.

Die Erfindung wird anhand der folgenden, nicht einschränkenden Beispiele näher erläutert.

Beispiele

Die Prozentangaben in den Beispielen bedeuten Gewichtsprozent, sofern aus dem Zusammenhang nichts anderes hervorgeht.

Polymer 1

In einem mit Ankerrührer ausgestatteten 41-Planschliffgefäß wurden 411,6 g vollentsalztes Wasser, 14,6 g einer Polystyrolsaat (Feststoffgehalt 33 %, mittlere Teilchengröße 29 nm) und 1,4 g einer 45 Gew.-% igen Lösung von Dodecylphenoxybenzoldisulfonsäure-Natriumsalz (Dowfax® 2A1, Dow Chemicals) sowie 15,4 g einer 7 Gew.-%igen Lösung von Natriumperoxidisulfat vorgelegt. Über ein geregeltes, außenliegendes Ölbad wurde das Reaktionsgefäß unter Rühren auf 93 °C aufgeheizt. Nach Erreichen der Temperatur wurde eine zuvor hergestellte Monomeremulsion bestehend aus 534,4 g vollentsalztem Wasser, 22,4 g einer 15 Gew.-%igen Lösung von Natriumlaurylsulfat (Disponil® SDS 15, Cognis), 8 g einer 45 Gew.-% igen Lösung von Dodecylphenoxybenzoldisulfonsäure-Natriumsalz (Dowfax® 2A1, Dow Chemicals), 12 g einer 10 Gew.-% igen Lösung von Natriumhydroxyd, 35 g Acrylsäure, 168 g Styrol, 829 g n-Butylacrylat und 168 g Acrylnitril gleichmäßig innerhalb von 2 Stunden und 45 Minuten zudosiert. Parallel dazu wurden 49,7 g einer 7 Gew.-%igen Lösung von Natriumperoxidisulfat zudosiert. Der Ansatz wurde unter Konstanthaltung der Temperatur für weitere 45 Minuten gerührt. Anschließend wurden 93,6 g einer 10 Gew.-%igen Lösung von Natriumhydroxid zugegeben, und der Reaktionsinhalt auf 60 °C abgekühlt. Anschließend wurden parallel zwei Zuläufe bestehend aus a) 24 g einer 10 Gew.-%igen Lösung von tert-Butylhydroperoxid und b) 33 g einer 13 Gew.-%igen Lösung enthaltend das Additionsprodukt aus 2,67 g Natriumdisulfit und 1,62 g Aceton innerhalb von 30 Minuten zudosiert. Der Reaktorinhalt wurde auf Raumtemperatur abgekühlt.

Erhalten wurde eine praktisch koagulatfreie Polymerdispersion mit einem Feststoffgehalt von 51 Gew.-%. Das Polymer wies eine über DSC gemessene Glasübergangstemperatur von +5°C auf.

Durch Zugabe von 810 g vollentsalztem Wasser wurde der Feststoffgehalt auf 30 Gew.-% gesenkt. Anschließend wurden 404 g einer 30 Gew.-% Lösung eines Maltodextrins (Fa. Cargill, MD® 09015) zugemischt.

Die erhaltene Abmischung wies einen Feststoffgehalt von 30 Gew.-% und einen pH Wert von 6,5 auf.

Polymer 2

Polymer 2 wurde analog Polymer 1 hergestellt, jedoch wurde bei der Abmischung eine auf 30 Gew.-% verdünnte Lösung eines Maltodextrins (Fa. Cerestar, Stärke 019 S1) verwendet.

Polymer 3

In einem mit Ankerrührer ausgestatteten 41-Planschliffgefäß wurden 411,6 g vollentsalztes Wasser, 14,6 g einer Polystyrolsaat (Feststoffgehalt 33 %, mittlere Teilchengröße 29 nm) und 1,4 g einer 45 Gew.-% igen Lösung von Dodecylphenoxybenzoldisulfonsäure-Natriumsalz (Dowfax® 2A1, Dow Chemicals) sowie 15,4 g einer 7 Gew.-%igen Lösung von Natriumperoxidisulfat vorgelegt. Über ein geregeltes, außenliegendes Ölbad wurde das Reaktionsgefäß unter Rühren auf 93 °C aufgeheizt. Nach Erreichen der Temperatur wurde eine zuvor hergestellte Monomeremulsion bestehend aus 534,4 g vollentsalztem Wasser, 22,4 g einer 15 Gew.-%igen Lösung von Natriumlaurylsulfat (Disponil® SDS 15, Cognis), 8 g einer 45 Gew.-% igen Lösung von Dodecylphenoxybenzoldisulfonsäure-Natriumsalz (Dowfax® 2A1, Dow Chemicals), 12 g einer 10 Gew.-% igen Lösung von Natriumhydroxyd, 36 g Acrylsäure, 60 g Styrol, 1044 g n-Butylacrylat und 60 g Acrylnitril gleichmäßig innerhalb von 2 Stunden zudosiert. Parallel dazu wurden in 2,5 Stunden 49,8 g einer 7 Gew.-%igen Lösung von Natriumperoxidisulfat zudosiert. Der Ansatz wurde unter Konstanthaltung der Temperatur für weitere 45 Minuten gerührt. Anschließend wurden 93,6 g einer 10 Gew.-%igen Lösung von Natriumhydroxid zugegeben, und der Reaktionsinhalt auf 60 °C abgekühlt. Anschließend wurden parallel zwei Zuläufe bestehend aus a) 24 g einer 10 Gew.-%igen Lösung von tert-Butylhydroperoxid und b) 33 g einer 13 Gew.-%igen Lösung enthaltend das Additionsprodukt aus 2,67 g Natriumdisulfit und 1,62 g Aceton innerhalb von 30 Minuten zudosiert. Der Reaktorinhalt wurde auf Raumtemperatur abgekühlt.

Erhalten wurde eine praktisch koagulatfreie Polymerdispersion mit einem Feststoffgehalt von 50 Gew.-%. Das Polymer wies eine über DSC gemessene Glasübergangstemperatur von -25°C.

Durch Zugabe von 810 g vollentsalztem Wasser wurde der Feststoffgehalt auf 30 Gew.-% gesenkt. Anschließend wurden 404 g einer 30 Gew.-% Lösung eines Maltodextrins (Fa. Cargill, MD® 09015) zugemischt.

Die erhaltene Abmischung wies einen Feststoffgehalt von 30 Gew.-% und einen pH Wert von 6,4 auf.

Polymer 4

In einem mit Ankerrührer ausgestatteten 41-Planschliffgefäß wurden 340,8 g vollentsalztes Wasser, 14,6 g einer Polystyrolsaat (Feststoffgehalt 33 %, mittlere Teilchengröße 29 nm) und 1,4 g einer 45 Gew.-% igen Lösung von Dodecylphenoxybenzoldisulfonsäure-Natriumsalz (Dowfax® 2A1, Dow Chemicals) sowie 15,4 g einer 7 Gew.-%igen Lösung von Natriumperoxidisulfat vorgelegt. Über ein geregeltes, außenliegendes Ölbad wurde das Reaktionsgefäß unter Rühren auf 93 °C aufgeheizt. Nach Erreichen der Temperatur wurde eine zuvor hergestellte Monomeremulsion bestehend aus 483,6 g vollentsalztem Wasser, 22,4 g einer 15 Gew.-%igen Lösung von Natriumlaurylsulfat (Disponil® SDS 15, Cognis), 8 g einer 45 Gew.-% igen Lösung von Dodecylphenoxybenzoldisulfonsäure-Natriumsalz (Dowfax® 2A1, Dow Chemicals), 12 g einer 10 Gew.-% igen Lösung von Natriumhydroxyd, 12 g eines Methacrylsäureesters mit einem endständig mit Phosphorsäure veresterten Oligopropylenoxid (Sipomer® PAM 200: $CH_2=C(CH_3)-COO-(CH_2CH(CH_3)O)_{8-10}-P(O)(OH)_2$, Rhodia), 24 g Acrylsäure, 168 g Styrol, 828 g n-Butylacrylat und 168 g Acrylnitril gleichmäßig innerhalb von 2 Stunden und 45 Minuten zudosiert. Parallel dazu wurden 87 g einer 4 Gew.-%igen Lösung von Natriumperoxidisulfat zudosiert. Der Ansatz wurde unter Konstanthaltung der Temperatur für weitere 45 Minuten gerührt. Anschließend wurden 62,4 g einer 10 Gew.-%igen Lösung von Natriumhydroxid zugegeben, und der Reaktionsinhalt auf 60 °C abgekühlt. Anschließend wurden parallel zwei Zuläufe bestehend aus a) 80 g einer 3 Gew.-%igen Lösung von tert-Butylhydroperoxid und b) 53,4 g vollentsalztes Wasser mit 33 g einer 13 Gew.-%igen Lösung enthaltend das Additionsprodukt aus 2,67 g Natriumdisulfit und 1,62 g Aceton innerhalb von 30 Minuten zudosiert. Der Reaktorinhalt wurde auf Raumtemperatur abgekühlt.

Erhalten wurde eine praktisch koagulatfreie Polymerdispersion mit einem Feststoffgehalt von 50 Gew.-%. Das Polymer wies eine über DSC gemessene Glasübergangstemperatur von +4°C.

Durch Zugabe von 810 g vollentsalztem Wasser wurde der Feststoffgehalt auf 30 Gew.-% gesenkt. Anschließend wurden 404 g einer 30 Gew.-% Lösung eines Maltodextrins (Fa. Cargill, MD® 09015) zugemischt.

Die erhaltene Abmischung wies einen Feststoffgehalt von 30 Gew.-%, einen pH Wert von 6,5 und eine durch dynamische Lichtstreuung (Malvern HPPS) gemessene Teilchengröße von 137 nm.

Polymer 5

In einem mit Ankerrührer ausgestatteten 4l-Planschliffgefäß wurden 1064,6 g vollentsalztes Wasser, 7,2 g einer Polystyrolsaat (Feststoffgehalt 33 %, mittlere Teilchengröße 29 nm), 0,6 g einer 45 Gew.-% igen Lösung von Dodecylphenoxybenzoldisulfonsäure-Natriumsalz (Dowfax® 2A1, Dow Chemicals) und 240,0 g Maltodextrin (Fa. Cargill, MD® 09015) sowie 7,8 g einer 7 Gew.-%igen Lösung von Natriumperoxidisulfat vorgelegt. Über ein geregeltes, außenliegendes Ölbad wurde das Reaktionsgefäß unter Rühren auf 93 °C aufgeheizt. Nach Erreichen der Temperatur wurde eine zuvor hergestellte Monomeremulsion bestehend aus 267,2 g vollentsalztem Wasser, 11,2 g einer 15 Gew.-%igen Lösung von Natriumlaurylsulfat (Disponil® SDS 15, Cognis), 4 g einer 45 Gew.-% igen Lösung von Dodecylphenoxybenzoldisulfonsäure-Natriumsalz (Dowfax® 2A1, Dow Chemicals), 6 g einer 10 Gew.-% igen Lösung von Natriumhydroxyd, 18 g Acrylsäure, 84 g Styrol, 414 g n-Butylacrylat und 84 g Acrylnitril gleichmäßig innerhalb von 2 Stunden zudosiert. Parallel dazu wurden innerhalb von 2,5 Stunden 34,8 g einer 2,5 Gew.-%igen Lösung von Natriumperoxidisulfat zudosiert. Der Ansatz wurde unter Konstanthaltung der Temperatur für weitere 45 Minuten gerührt. Anschließend wurden 46,8 g einer 10 Gew.-%igen Lösung von Natriumhydroxid zugegeben, und der Reaktionsinhalt auf 60 °C abgekühlt. Anschließend wurden parallel zwei Zuläufe bestehend aus a) 30 g einer 2 Gew.-%igen Lösung von tert-Butylhydroperoxid und b) 55,6g vollentsalztes Wasser mit 16,4 g einer 13 Gew.-%igen Lösung enthaltend das Additionsprodukt aus 2,67 g Natriumdisulfit und 1,62 g Aceton innerhalb von 30 Minuten zudosiert. Der Reaktorinhalt wurde auf Raumtemperatur abgekühlt.

Erhalten wurde eine praktisch koagulatfreie Polymerdispersion mit einem Feststoffgehalt von 29,3 Gew.%, einem pH-Wert von 6,1. Das Polymer wies eine über DSC gemessene Glasübergangstemperatur von +5°C auf. Die durch dynamische Lichstreuung (Malvern HPPS) gemessene Teilchengröße betrug 149 nm.

Vergleichspolymer 1

In einem mit Ankerrührer ausgestatteten 4l-Planschliffgefäß wurden 411,7 g vollentsalztes Wasser, 14,5 g einer Polystyrolsaat (Feststoffgehalt 33 %, mittlere Teilchengröße 29 nm) und 1,4 g einer 45 Gew.-% igen Lösung von Dodecylphenoxybenzoldisulfonsäure-Natriumsalz (Dowfax® 2A1, Dow Chemicals) sowie 15,4 g einer 7 Gew.-%igen Lösung von Natriumperoxidisulfat vorgelegt. Über ein geregeltes, außenliegendes Ölbad wurde das Reaktionsgefäß unter Rühren auf 93 °C aufgeheizt. Nach Erreichen der Temperatur wurde eine zuvor hergestellte Monomeremulsion bestehend aus 534,2 g vollentsalztem Wasser, 22,4 g einer 15 Gew.-%igen Lösung von Natriumlaurylsulfat (Disponil® SDS 15, Cognis), 8 g einer 45 Gew.-% igen Lösung von Dodecylphenoxybenzoldisulfonsäure-Natriumsalz (Dowfax® 2A1, Dow Chemicals), 12 g einer 10 Gew.-% igen Lösung von Natriumhydroxyd, 36 g Acrylsäure, 60 g Styrol, 1044 g n-Butylacrylat und 60 g Acrylnitril gleichmäßig innerhalb von 2 Stunden zudosiert. Parallel dazu wurden 49,7 g einer 7 Gew.-%igen Lösung von Natriumperoxidisulfat zudosiert. Der Ansatz wurde unter Konstanthaltung der Temperatur für weitere 45 Minuten gerührt. Anschließend wurden 93,6 g einer 10 Gew.-%igen Lösung von Natriumhydroxid zugegeben, und der Reaktionsinhalt auf 60 °C abgekühlt. Anschließend wurden parallel zwei Zuläufe bestehend aus a) 24 g einer 10 Gew.-%igen Lösung von tert-Butylhydroperoxid und b) 33 g einer 13 Gew.-%igen Lösung enthaltend das Additionsprodukt aus 2,67 g Natriumdisulfit und 1,62 g Aceton innerhalb von 30 Minuten zudosiert. Der Reaktorinhalt wurde auf Raumtemperatur abgekühlt.

Erhalten wurde eine praktisch koagulatfreie Polymerdispersion mit einem Feststoffgehalt von 50,2 Gew.-%, einem pH-Wert von 7,5 und einer durch dynamische Lichstreuung (Malvern HPPS) gemessenen Teilchengröße von 172 nm. Das Polymer wies eine über DSC gemessene Glasübergangstemperatur von -25 °C auf.

Beispiel 1 (Vergleichsbeispiel)

Zu 150 g einer 20 Gew.-%ige Anschlämmung von präzipitiertem Calciumcarbonat (PCC) wurden zunächst unter leichtem Rühren bei Raumtemperatur 3 g einer 30 Gew.-%igen Dispersion des Polymeren 1 gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Beispiel 2 (Vergleichsbeispiel)

Zu 150 g einer 20 Gew.-%ige Anschlämmung von präzipitiertem Calciumcarbonat (PCC) wurden zunächst unter leichtem Rühren bei Raumtemperatur 3 g einer 30 Gew.-%igen Dispersion des Polymeren 2 gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Beispiel 3 (Vergleichsbeispiel)

Zu 150 g einer 20 Gew.-%ige Anschlämmung von präzipitiertem Calciumcarbonat (PCC) wurden zunächst unter leichtem Rühren bei Raumtemperatur 3 g einer 30 Gew.-%igen Dispersion des Polymeren 3 gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Beispiel 4

Zu 150 g einer 20 Gew.-%ige Anschlämmung von präzipitiertem Calciumcarbonat (PCC) wurden zunächst unter leichtem Rühren bei Raumtemperatur 3 g einer 30 Gew.-%igen Dispersion des Polymeren 4 gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Beispiel 5 (Vergleichsbeispiel)

Zu 150 g einer 20 Gew.-%ige Anschlämmung von präzipitiertem Calciumcarbonat (PCC) wurden zunächst unter leichtem Rühren bei Raumtemperatur 3 g einer 30 Gew.-%igen Dispersion des Polymeren 5 gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Vergleichsbeispiel (VB) 1

Zu 150 g einer 20 Gew.-%ige Anschlämmung von präzipitiertem Calciumcarbonat (PCC) wurden zunächst unter leichtem Rühren bei Raumtemperatur 3 g einer 30 Gew.-%igen Dispersion des Vergleichspolymeren 1 gemischt. Während der Zugabe und danach wurde die Mischung mit Hilfe eines Heiltof-Rührers bei 1000 Umdrehungen pro Minute (UpM) gerührt. Der pH-Wert der Mischung wurde anschließend auf 8,5 eingestellt.

Herstellung von füllstoffhaltigem Papier

Beispiele 6 - 20
Vergleichsbeispiele 2 - 7

Eine Mischung aus gebleichtem Birkensulfat und gebleichtem Kiefernsulfit wurde im Verhältnis von 70/30 bei einer Feststoffkonzentration von 4 % im Laborpulper stippenfrei aufgeschlagen, bis ein Mahlgrad von 30 - 35 erreicht wurde. Dem aufgeschlagenen Stoff wurde anschließend ein optischer Aufheller (Blankophor® PSG, Kemira Oy) sowie eine kationische Stärke (HiCat® 5163 A) zugegeben. Der Aufschluss der kationischen Stärke erfolgte als 10 Gew.-%ige Stärkeslurry in einem Jet-Kocher bei 130 °C und 1 Minute Verweilzeit. Die Dosiermenge des optischen Aufhellers betrug 0,5 Gew.-% Handelsware, bezogen auf den Trockengehalt der Papierstoffsuspension. Die Dosiermenge der kationischen Stärke betrug 0,5 Gew.-% Stärke, bezogen auf den Trockengehalt der Papierstoffsuspension. Der pH-Wert des Stoffs lag dabei im Bereich zwischen 7 und 8. Der gemahlene Stoff wurde anschließend durch Zugabe von Wasser auf eine Feststoffkonzentration von 0,35 Gew.-% verdünnt.

Um das Verhalten der oben beschriebenen wässrigen Füllstoff-Slurries bei der Herstellung von füllstoffhaltigem Papier zu ermitteln, legte man jeweils 500 ml der Papierstoffsuspension vor und dosiert jeweils in diese Pulpe die gemäß den Beispielen behandelten Slurries sowie ein kationisches Polyacrylamid als Retentionsmittel (Polymin® KE 540, BASF Aktiengesellschaft). Die Dosiermenge des Retentionsmittels betrug in allen Fällen jeweils 0,01 Gew.-% Polymer, bezogen auf den Trockengehalt der Papierstoffsuspension.

Anschließend wurden Blätter mit den oben beschriebenen vorbehandelten Füllstoffen gebildet (Beispiele 6 - 20 und Vergleichsbeispiele 2 - 4). Die dazu eingesetzte Füllstoffmenge wurde so angepasst, dass die Füllstoffgehalte ca. 20 %, 30 % bzw. 40 % betrugen. Im Falle der vorbehandelten Füllstoffe ist die eingesetzte Slurrymenge, die eingesetzt werden muss, um einen bestimmten Zielwert zu erreichen, stets geringer als im Falle der unbehandelten Füllstoffe.

Zu jedem der vorbehandelten Füllstofftypen wurden außerdem Vergleichsbeispiele mit unbehandeltem Füllstoff durchgeführt (Vergleichsbeispiele 5 - 7). Dazu wurde zunächst in Vorversuchen die Menge an unbehandelter Füllstoffslurry ermittelt, die nötig ist, um einen Füllstoffgehalt von ca. 20 %, 30 % bzw. 40 % einzustellen. Anschließend wurden Blätter mit den unbehandelten Füllstoffen gebildet.

Die Papierblätter wurden jeweils auf einem Rapid-Köthen-Blattbildner nach ISO 5269/2 mit einem Blattgewicht von 70 g/m$^2$ gefertigt und anschließend 7 Minuten bei 90 °C getrocknet.

Prüfung der Papierblätter

Nach einer Lagerzeit im Klimaraum bei konstant 23 °C und 50 % Luftfeuchtigkeit für 12 Stunden wurden die Trockenreißlänge der Blätter nach DIN 54540, die innere Festigkeit nach DIN 54516 und die Biegesteifigkeit nach DIN 53121 ermittelt. Die Ergebnisse sind in Tabelle 1 angegeben. Die Slurries entsprechend den Vergleichsbeispielen bzw. die Vergleichsbeispiele mit den daraus hergestellten Papierblättern sind mit dem Zusatz (VB) gekennzeichnet. Bei den anderen Beispielen handelt es sich um erfindungsgemäße Beispiele.

Tabelle 1

| Prüfung der Papierblätter | | | | | |
|---|---|---|---|---|---|
| Beispiel bzw. Vergleichsbeispiel (VB) | Slurry nach Beispiel bzw. Vergleichsbeispiel (VB) | Füllstoffgehalt [%] | Trockenreislänge [m] | Innere Festigkeit [N] | BiegeSteifigkeit [mN] |
| 6 | 1 | 20,1 | 5781 | 354 | 70,1 |
| 7 | 1 | 29,5 | 4921 | 301 | 53,3 |
| 8 | 1 | 39,3 | 4045 | 254 | 39,2 |
| 9 | 2 | 20,9 | 5845 | 348 | 69,4 |
| 10 | 2 | 29,1 | 4911 | 299 | 53,9 |
| 11 | 2 | 40,7 | 3934 | 251 | 38,3 |
| 12 | 3 | 19,8 | 5912 | 358 | 70,5 |
| 13 | 3 | 30,2 | 5055 | 291 | 54,5 |
| 14 | 3 | 40,9 | 4123 | 247 | 40,1 |
| 15 | 4 | 20,1 | 5801 | 339 | 71,8 |
| 16 | 4 | 29,2 | 5012 | 285 | 53,5 |
| 17 | 4 | 40,2 | 3945 | 239 | 39,7 |
| 18 | 5 | 20,6 | 5734 | 363 | 71,3 |
| 19 | 5 | 30,1 | 4819 | 312 | 55,1 |
| 20 | 5 | 39,1 | 3945 | 265 | 40,4 |
| VB 2 | VB 1 | 20,8 | 5212 | 287 | 69,1 |
| VB 3 | VB 1 | 30,4 | 4378 | 239 | 52,1 |
| VB 4 | VB 1 | 39,2 | 3619 | 188 | 37,7 |

(fortgesetzt)

| Prüfung der Papierblätter | | | | | |
|---|---|---|---|---|---|
| Beispiel bzw. Vergleichsbeispiel (VB) | Slurry nach Beispiel bzw. Vergleichsbeispiel (VB) | Füllstoffgehalt [%] | Trockenreislänge [m] | Innere Festigkeit [N] | BiegeSteifigkeit [mN] |
| VB 5 | PCC ohne Vorbehandlung | 20,2 | 4276 | 157 | 67,2 |
| VB 6 | PCC ohne Vorbehandlung | 30,7 | 3321 | 109 | 51,3 |
| VB 7 | PCC ohne Vorbehandlung | 39,8 | 2467 | 71 | 35,9 |

**Patentansprüche**

1. Wässrige Anschlämmungen von feinteiligen Füllstoffen, die zumindest teilweise mit anionischen Latices überzogen sind, **dadurch gekennzeichnet, dass** die Anschlämmungen erhältlich sind durch Behandeln von wässrigen Anschlämmungen feinteiliger Füllstoffe mit einer wässrigen Dispersion enthaltend mindestens einen anionischen Latex, der mindestens ein Phosphon- und/oder Phosphorsäuregruppen-enthaltendes Monomer einpolymerisiert enthält, und mindestens eine abgebaute Stärke, die ein mittleres Molekulargewicht $M_w$ von 1 000 bis 65 000 aufweist.

2. Wässrige Anschlämmung nach Anspruch 1, **dadurch gekennzeichnet, dass** die Glasübergangstemperatur des anionischen Latices im Bereich von -50 bis +10 °C liegt.

3. Wässrige Anschlämmung nach Anspruch 1, **dadurch gekennzeichnet, dass** Phosphorsäuregruppen-enthaltende Monomere verwendet werden, die durch Veresterung von monoethylenisch ungesättigten $C_3$-$C_8$-Carbonsäuren mit gegebenenfalls monoalkoxylierten Phosphorsäuren der allgemeinen Formel (I)

$$H\text{-}[X]_n\text{-}P(O)(OH)_2 \qquad (I)$$

erhältlich sind, worin

X eine geradkettige oder verzweigte $C_2$-$C_6$-Alkylenoxideinheit und
n eine ganze Zahl von 0 bis 20

bedeuten.

4. Wässrige Anschlämmung nach Anspruch 3, **dadurch gekennzeichnet, dass** man monoalkoxylierte Phosphorsäuren der Formel (I) verwendet, in denen X eine geradkettige oder verzweigte $C_2$-$C_3$-Alkylenoxideinheit ist, und n eine ganze Zahl zwischen 5 und 15 ist.

5. Wässrige Anschlämmung nach Anspruch 3 oder 4, **dadurch gekennzeichnet, dass** man Mischungen von monoalkoxylierten Phosphorsäuren der Formel (I) mit 5 bis 15 Einheiten Propylenoxid einsetzt.

6. Wässrige Anschlämmung nach Anspruch 3, **dadurch gekennzeichnet, dass** es sich bei der monoethylenisch ungesättigten $C_3$-$C_8$-Carbonsäure um Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und/oder Itaconsäure handelt.

7. Wässrige Anschlämmung nach Anspruch 6, **dadurch gekennzeichnet, dass** es sich bei der monoethylenisch ungesättigten $C_3$-$C_8$-Carbonsäure um Acrylsäure und Methacrylsäure handelt.

8. Wässrige Anschlämmung nach einem der Ansprüche 1, 3 bis 7, **dadurch gekennzeichnet, dass** die anionischen Latices aus

(1) Styrol und/oder Acrylnitril oder Methacrylnitril,

(2) Acrylsäureestern und/oder Methacrylsäureestern von $C_1$- bis $C_{10}$-Alkoholen, und gegebenenfalls

(3) Acrylsäure, Methacrylsäure, Maleinsäure und/oder Itaconsäure, und

(4) (Meth)acrylsäureester von gegebenenfalls monoalkyoxylierten Phosphorsäuren der Formel (I), worin X und n die zuvor genannte Bedeutung haben,

bestehen.

9. Wässrige Anschlämmung nach Anspruch 8, **dadurch gekennzeichnet, dass** die anionischen Latices aus 2 - 25 Gew.-% Styrol, 2 - 25 Gew.-% Acrylnitril, 50 - 95 Gew.-% $C_1$-$C_4$-Alkylacrylaten, 0 - 5 Gew.-% Acrylsäure und 0,1 - 5 Gew.-% (Meth)acrylsäureester von monoalkoxylierten Phosphorsäuren der Formel (I) bestehen, worin X eine Propylenoxideinheit ist, und n eine ganze Zahl zwischen 5 und 15 ist.

10. Wässrige Anschlämmung nach einem der vorstehenden Ansprüche , **dadurch gekennzeichnet, dass** es sich bei der abgebauten Stärke um ein Maltodextrin handelt.

11. Wässrige Anschlämmung nach einem der vorstehenden Ansprüche, **dadurch gekennzeichnet, dass** sie 1 bis 70 Gew.-% mindestens eines feinteiligen Füllstoffs und 0,01 bis 10 Gew.-% einer wässrigen Dispersion enthaltend mindestens einen anionischen Latex und mindestens eine abgebaute Stärke, Feststoffanteil der Dispersion bezogen auf den Füllstoff, enthalten.

12. Verfahren zur Herstellung einer wässrigen Anschlämmung nach einem der vorstehenden Ansprüche, **dadurch gekennzeichnet, dass** man zu einer wässrigen Anschlämmung mindestens eines feinteiligen Füllstoffs 0,01 bis 10 Gew.-% einer wässrigen Dispersion enthaltend mindestens einen anionischen Latex und mindestens eine abgebaute Stärke, Feststoffanteil der Dispersion bezogen auf den Füllstoff, zusetzt, oder die wässrige Anschlämmung eines feinteiligen Füllstoffs in eine wässrige Dispersion enthaltend mindestens einen anionischen Latex und mindestens eine abgebaute Stärke einträgt und die Komponenten jeweils mischt, oder den feinteiligen Füllstoff fest in eine wässrige Dispersion enthaltend mindestens einen anionischen Latex und mindestens eine abgebaute Stärke einbringt.

13. Verwendung der wässrigen Anschlämmungen nach einem der Ansprüche 1 bis 6 als Zusatz zum Papierstoff bei der Herstellung von füllstoffhaltigem Papier, füllstoffhaltigem Karton oder füllstoffhaltiger Pappe durch Entwässern des Papierstoffs.

**Claims**

1. Aqueous slurries of finely divided fillers that are at least partly coated with anionic lattices, **characterized in that** said slurries are obtainable by treating aqueous slurries of finely divided fillers with an aqueous dispersion comprising at least one anionic latex that comprises at least one monomer comprising phosponic and/or phosphoric acid groups incorporated in the form of polymerized units, and at least one degraded starch with an average molecular weight $M_w$ of from 1000 to 65,000.

2. Aqueous slurry according to claim 1, **characterized in that** the glass transition temperature of the anionic latex is in the range of -50°C to +10°C.

3. Aqueous slurry according to claim 1, **characterized in that** monomers comprising phosphoric acid groups are used and which are obtainable by esterification of monoethylenically unsaturated $C_3$-$C_8$-carboxylic acids with optionally monoalkoxylated phosphoric acids of the general Formula (I)

$$H\text{-}[X]_n\text{-}P(O)(OH)_2 \qquad (I)$$

in which

X is a straight-chain or branched $C_2$-$C_6$-alkyleneoxide unit and
n is an integer from 0 to 20.

4. Aqueous slurry according to claim 3, **characterized in that** monoalkoxylated phosphoric acids of the Formula (I)

in which X is a straight-chain or branched $C_2$-$C_3$-alkyleneoxide unit and n is an integer from 5 to 15, are used.

5. Aqueous slurry according to claim 3 or 4, **characterized in that** mixtures of monoalkoxylated phosphoric acids of the Formula (I) having from 5 to 15 propylene oxide units are used.

6. Aqueous slurry according to claim 3, **characterized in that** said monoethylenically unsaturated $C_3$-$C_8$-carboxylic acid is acrylic acid, methacrylic acid, dimethylacrylic acid, ethacrylic acid, maleic acid, citraconic acid, methylenemalonic acid, crotonic acid, fumaric acid, mesaconic acid and/or itaconic acid.

7. Aqueous slurry according to claim 6, **characterized in that** said monoethylenically unsaturated $C_3$-$C_8$-carboxylic acid is acrylic acid or methacrylic acid.

8. Aqueous slurry of claim 1, 3 to 7, **characterized in that** said anionic lattices consist of

   (1) styrene and/or acrylonitrile or methacrylonitrile,
   (2) acrylates and/or methacrylates of $C_1$ to $C_{10}$ alcohols, and optionally
   (3) acrylic acid, methacrylic acid, maleic acid and/or itaconic acid, and
   (4) (meth)acrylates of optionally monoalkoxylated phosphoric acids of the Formula (I), in which X and n have the aforementioned meaning.

9. Aqueous slurry according to claim 8, **characterized in that** said anionic lattices consist of 2%-25% by weight of styrene, 2%-25% by weight of acrylonitrile, 50%-95% by weight of $C_1$-$C_4$-alkylacrylates, 0%-5% by weight of acrylic acid and 0.1%-5% by weight of (meth)acrylates of monoalkoxylated phosphoric acids of the Formula (I), in which X is a propylene oxide unit and n is an integer between 5 and 15.

10. Aqueous slurry according to any of the preceding claims, **characterized in that** the degraded starch is a maltodextrin.

11. Aqueous slurry according to any of the preceding claims, **characterized in that** it comprises from 1% to 70% by weight of at least one finely divided filler and from 0.01% to 10% by weight of an aqueous dispersion comprising at least one anionic latex and at least one degraded starch, solids content of the dispersion based on the filler.

12. A process for the preparation of an aqueous slurry according to any of the preceding claims, **characterized in that** from 0.01% to 10% by weight of an aqueous dispersion comprising at least one anionic latex and at least one degraded starch, solids content of the dispersion based on the filler, is added to an aqueous slurry of at least one finely divided filler, or the aqueous slurry of a finely divided filler is introduced into an aqueous dispersion comprising at least one anionic latex and at least one degraded starch and the components are mixed in each case, or the finely divided filler is introduced in solid form into an aqueous dispersion comprising at least one anionic latex and at least one degraded starch.

13. Use of the aqueous slurries according to any of claims 1 to 6 as an additive to the paper stock in the production of filler-containing paper, filler-containing cardboard or filler-containing board by drainage of the paper stock.

**Revendications**

1. Suspensions aqueuses de matières de charge fines, qui sont revêtues au moins en partie de latex anioniques, **caractérisées en ce que** les suspensions peuvent être obtenues par traitement de suspensions aqueuses de matières de charge fines avec une dispersion aqueuse contenant au moins un latex anionique, qui contient sous forme polymérisée au moins un monomère contenant un groupe phosphono et/ou un groupe acide phosphorique, et au moins un amidon dégradé, qui présente un poids moléculaire moyen $M_w$ de 1 000 à 65 000.

2. Suspension aqueuse selon la revendication 1, **caractérisée en ce que** la température de transition vitreuse du latex anionique est comprise entre -50 et +10 °C.

3. Suspension aqueuse selon la revendication 1, **caractérisée en ce que** sont utilisés des monomères contenant des groupes acide phosphorique qui peuvent être obtenus par estérification d'acides carboniques en $C_3$-$C_8$ monoéthy-léniques insaturés avec éventuellement des acides phosphoriques monoalkoxyliques de formule générale (I)

$$H-[X]_n-P(O)(OH)_2 \qquad (I)$$

dans laquelle

X est une unité d'alkylène-oxyde en $C_2$-$C_6$ à chaîne droite ou ramifiée et
n est un nombre entier entre 0 et 20.

4. Suspension aqueuse selon la revendication 3, **caractérisée en ce qu'**on utilise des acides phosphoriques monoalkoxyliques de formule (I) dans lesquels X est une unité d'alkylène-oxyde en $C_2$-$C_3$ à chaîne droite ou ramifiée et n est un nombre entier entre 5 et 15.

5. Suspension aqueuse selon la revendication 3 ou 4, **caractérisée en ce qu'**on utilise des mélanges d'acides phosphoriques monoalkoxyliques de formule (I) avec 5 à 15 unités de propylène-oxyde.

6. Suspension aqueuse selon la revendication 3, **caractérisée en ce que** l'acide carbonique en $C_3$-$C_8$ monoéthylénique insaturé est un acide acrylique, un acide méthacrylique, un acide diméthylacrylique, un acide éthacrylique, un acide maléique, un acide citraconique, un acide méthylène-malonique, un acide crotonique, un acide fumarique, un acide mésaconique et/ou un acide itaconique.

7. Suspension aqueuse selon la revendication 6, **caractérisée en ce que** l'acide carbonique en $C_3$-$C_8$ monoéthylénique insaturé est un acide acrylique et un acide méthacrylique.

8. Suspension aqueuse selon l'une quelconque des revendications 1, 3 à 7, **caractérisée en ce que** les latex anioniques sont constitués de

(1) styrène et/ou acrylonitrile ou méthacrylonitrile,
(2) esters d'acide acrylique et/ou esters d'acide méthacrylique d'alcools en $C_1$ à $C_{10}$,
et éventuellement
(3) acide acrylique, acide méthacrylique, acide maléique et/ou acide itaconique, et
(4) esters d'acide (méth)acrylique d'acides phosphoriques éventuellement monoalkyoxyliques de formule (I), X et n ayant la signification mentionnée plus haut.

9. Suspension aqueuse selon la revendication 8, **caractérisée en ce que** les latex anioniques sont constitués de 2 à 25 % en poids de styrène, de 2 à 25 % en poids d'acrylonitrile, de 50 à 95 % en poids d'alkylacrylates en $C_1$-$C_4$, de 0 à 5 % en poids d'acide acrylique et de 0,1 à 5 % en poids d'esters d'acide (méth)acrylique d'acides phosphoriques monoalkoxyliques de formule (I), X étant une unité propylène-oxyde et n étant un nombre entier entre 5 et 15.

10. Suspension aqueuse selon l'une quelconque des revendications précédentes, **caractérisée en ce que** l'amidon dégradé est une maltodextrine.

11. Suspension aqueuse selon l'une quelconque des revendications précédentes, **caractérisée en ce qu'**elle contient 1 à 70 % en poids d'au moins une matière de charge fine et 0,01 à 10 % en poids d'une dispersion aqueuse contenant au moins un latex anionique et au moins un amidon dégradé, la teneur en matière solide de la dispersion étant rapportée à la matière de charge.

12. Procédé de fabrication d'une suspension aqueuse selon l'une quelconque des revendications précédentes, **caractérisé en ce qu'**on ajoute à une suspension aqueuse au moins d'une matière de charge fine 0,01 à 10 % en poids d'une dispersion aqueuse contenant au moins un latex anionique et au moins un amidon dégradé, la teneur en matière solide de la dispersion étant rapportée à la matière de charge, ou on introduit la suspension aqueuse d'une matière de charge fine dans une dispersion aqueuse contenant au moins un latex anionique et au moins un amidon dégradé et on mélange à chaque fois les composants, ou on introduit la matière de charge fine sous forme solide dans une dispersion aqueuse contenant au moins un latex anionique et au moins un amidon dégradé.

13. Utilisation des suspensions aqueuses selon l'une quelconque des revendications 1 à 6 comme ajout à la pâte à papier lors de la fabrication de papiers contenant une matière de charge, de cartons contenant une matière de charge ou de carton gaufré contenant une matière de charge par assèchement de la pâte à papier.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03074786 A
- EP 08159619 A
- EP 08159631 A
- WO 03087472 A1
- DE 19821089 A1
- WO 2005012637 A1

**In der Beschreibung aufgeführte Nicht-Patentliteratur**

- **G. KANIG.** *Kolloid-Zeitschrift & Zeitschrift für Polymere,* vol. 190, 1
- **T. G. FOX.** *Bull. Am. Phys. Soc.,* 1956, vol. II (1), 123
- Ullmann's Encyclopädie der technischen Chemie. Verlag Chemie, 1980, vol. 19, 18
- Ullmann's Encyclopedia of Industrial Chemistry. VCH Weinheim, 1992, vol. A21, 169
- **J. BRANDRUP ; E. H. IMMERGUT.** Polymer Handbook. J. Wiley, 1966
- Methoden der organischen Chemie. **HOUBEN-WEYL.** Makromolekulare Stoffe. Georg Thieme Verlag, 1961, vol. XIV, 192-209